(19) Europäisches Patentamt
European Patent Office
Office européen des brevets

(11) Publication number: **0 132 810**
**A1**

(12) **EUROPEAN PATENT APPLICATION**

(21) Application number: 84108641.6

(22) Date of filing: 21.07.84

(51) Int. Cl.[4]: C 03 C 3/064
C 03 C 3/066, C 03 C 3/068
C 03 C 3/089, C 03 C 3/091
C 03 C 3/093, C 03 C 3/095
C 03 C 3/097, C 03 C 3/115
C 03 C 3/118
//H01C7/00

(30) Priority: 25.07.83 US 517237

(43) Date of publication of application:
13.02.85 Bulletin 85/7

(84) Designated Contracting States:
BE DE FR GB IT LU NL

(71) Applicant: E.I. DU PONT DE NEMOURS AND COMPANY
1007 Market Street
Wilmington Delaware 19898(US)

(72) Inventor: Hormadaly, Jacob
1422 Carson Road
Wilmington Delaware 19803(US)

(74) Representative: von Kreisler, Alek, Dipl.-Chem. et al,
Deichmannhaus am Hauptbahnhof
D-5000 Köln 1(DE)

(54) **Borosilicate glass composition.**

(57) The invention is directed to a barium borosilicate glass which is free of Bi, Cd and Pb. The glass is especially useful as a binder for thick film resistor compositions in which it also serves to adjust the TCR of resistors made therefrom.

EP 0 132 810 A1

TITLE

# BOROSILICATE GLASS COMPOSITIONS

## Field of Invention

The invention relates to borosilicate glass compositions which are especially useful as the binder component for thick film resistor compositions.

## Background of the Invention

Thick film materials are mixtures of metal, metallic oxides, glass and/or ceramic powders dispersed in an organic medium. These materials, which are applied to nonconductive substrates to form conductive, resistive or insulating films, are used in a wide variety of electronic and light electrical components.

The properties of such thick film compositions depend on the specific constituents of the compositions. Most of such thick film compositions contain three major components. A conductive phase determines the electrical properties and influences the mechanical properties of the final film. A binder, usually a glass and/or crystalline oxide, holds the thick film together and bonds it to a substrate, and an organic medium (vehicle) acts as a dispersing agent and influences the application characteristics of the composition and particularly its rheology.

High stability and low process sensitivity are critical requirements for thick film resistors in microcircuit applications. In particular, it is necessary that resistivity ($R_{av}$) of a resistor be stable over a wide range of temperature conditions. Thus, the thermal coefficient of resistance (TCR) is a critical variable in any thick film resistor. Because thick film resistor compositions are comprised of a functional (conductive) phase and a permanent binder phase, the properties of the

conductive and binder phases and their interactions with each other and with the substrate affect both resistivity and TCR.

Glass is most frequently used as the inorganic binder for thick film resistors. Frequently used glass frits have been borosilicate frits, such as barium, calcium or other alkaline earth borosilicate frits. The preparation of such glass frits is well known and consists, for example, in melting together the constituents of the glass in the form of their oxides and pouring such molten composition into water to form the frit. The batch ingredients may, of course, be any compound that will yield the desired oxides under the usual conditions of frit production. For example, boric oxide will be obtained from boric acid; silicon dioxide will be produced from flint; barium oxide will be produced from barium carbonate; etc. The glass is preferably milled in a ball mill with water to reduce the particle size of the frit and to obtain a frit of substantially uniform size.

Despite the wide variety of glasses which have been used as the binder for thick film resistor materials, there remains a need for glass binder materials which (1) can be used to enhance either positive or negative TCR which (2) are nontoxic and (3) will also yield resistors which are stable after laser trimming.

Summary of the Invention

The invention is, therefore, directed in its primary aspect to a glass composition which is substantially free of Bi, Cd and Pb comprising by mole %:

A. 50-85% of a material selected from the group consisting of 20-60% $B_2O_3$, 10-50% $SiO_2$,

0-15% $Al_2O_3$, 0-5% $SnO_2$, 0-10% $ZrO_2$, 0-5% $Nb_2O_5$, 0-5% $MoO_3$, 0-5% $WO_3$, 0-10% $TiO_2$, 0-10% $V_2O_5$, 0-10% $Ta_2O_5$, 0-10% $HfO_2$ and mixtures thereof and

B. 50-15% of a material selected from the group consisting of 0-15% MgO, 0-20% CaO, 0-5% $Cr_2O_3$, 0-30% MnO, 0-5% $Fe_2O_3$, 0-15% CoO, 0-15% NiO, 0-5% CuO, 0-35% ZnO, 0-20% SrO, 10-35% BaO and 0-5% of a fluoride of a metal selected from the group consisting of alkali metals, alkaline earth metals and nickel and mixtures thereof, characterized further in that

(1) the mole ratio $B_2O_3/SiO_2 \geq 0.8$;

(2) $\Sigma(B_2O_3$ and $SiO_2) \geq 50$;

(3) the mole ratio

$$\frac{B_2O_3 + Al_2O_3}{SiO_2 + SnO_2 + ZrO_2} = 0.8\text{-}4.$$

In a secondary aspect, the invention is directed to a screen-printable thick film resistor composition comprising a dispersion in organic medium of an admixture of finely divided particles of electrically conductive material and the above-described glass composition.

In a still further aspect, the invention is directed to a resistor comprising a patterned thin layer of the above-described dispersion, which has been dried and fired in a nonoxidizing atmosphere to effect volatilization of the organic medium and liquid phase sintering of the inorganic binder.

In this Summary of the Invention as well as in the Detailed Description of the Invention which follows, all percentages are on a molar basis relative to the total glass composition unless otherwise indicated.

## DETAILED DESCRIPTION OF THE INVENTION

In the discussion which follows, all compositional percentages are mole % unless otherwise stated.

The glass composition of the invention is comprised basically of glass-forming materials and glass-modifying materials. By the term "glass-forming material" is meant a material which upon melting and cooling will form a glass by itself without the addition of other materials. The term "glass-forming material" also includes "conditional" glass-forming material which become part of the glass network. By conditional glass forming material is meant material which upon melting and cooling will form a glass only if other metal oxides are present. Despite the fact that the materials in Group A are characterized as "glass formers", this does not mean that they are necessarily functioning as glass formers in these glass compositions. The term refers only to their general characteristization in the art as being capable of glass formation under certain circumstances. Suitable glass-forming materials and conditional glass formers are $B_2O_3$, $SiO_2$, $Al_2O_3$, $SnO_2$, $ZrO_2$, $Nb_2O_5$, $MoO_3$, $WO_3$, $TiO_2$, $V_2O_5$, $Ta_2O_5$ and $HfO_2$. Of these, only $B_2O_3$ and $SiO_2$ are essential to all compositions of the invention.

The boron-containing glass former must constitute at least 20% of the glass composition in order that the viscosity of the glass be suitable for application in thick film resistor systems. However, it must not exceed 60% and preferably not more than 55% lest the humidity stability of the resistor in which it is used be too low.

Similarly, the silica component must be at least 10% of the glass in order that the glass has satisfactory durability and an appropriate coefficient of expansion for the particular ceramic substrate on which thick film resistor paste is used. Nevertheless, the amount of $SiO_2$ should not exceed 50%. When higher amounts of $SiO_2$ are used, the softening point of the glass may be elevated excessively and the TCR of the resultant resistor becomes too low.

Other glass-forming materials are not essential for all compositions of the invention; however, $Al_2O_3$, $SnO_2$, $ZrO_2$, $Nb_2O_5$, $MoO_3$, $WO_3$, $TiO_2$, $V_2O_5$, $Ta_2O_5$ and $HfO_2$ can be used in addition to $B_2O_3$ and $SiO_2$ to adjust the physical properties of the glass for particular applications. For example, $Al_2O_3$ can be used in limited quantities to raise softening point. However, if more than 15% is used, the softening point is elevated excessively. On the other hand, $SnO_2$ is added to lower the resistance of the resistor system in which they are used. The amount of $SnO_2$ used for this purpose is, however, limited by the comparatively low solubility of $SnO_2$ in glass systems of the type described here. Similarly while small concentrations of $ZrO_2$ may be quite desirable to adjust TCR and improve durability, the amount of $ZrO_2$ which can be used is likewise limited because of its low solubility in this system.

The transition metal glass formers or conditional glass formers must also be used within certain rather narrow limits as follows:
$ZrO_2$ 0-10%, $Nb_2O_5$ 0-5%, $MoO_3$ 0-5%, $HfO_2$ 0-10%, $Ta_2O_5$ 0-10% and $WO_3$ 0-5%.

In addition to the above-described limitations on the amount of each glass former or conditional glass former which can be used, it is essential that the glass-forming materials constitute 50-85% of the glass formulation. Also, the total amount of $B_2O_3$ and $SiO_2$ must themselves constitute at least 50% of the glass composition and 60-70% is preferred. In addition, the mole ratio $B_2O_3/SiO_2$ must be at least 0.8. Furthermore, the total content of glass formers in the composition must comply with the molar relationship,

$$\frac{B_2O_3 + Al_2O_3}{SiO_2 + SnO_2 + ZrO_2} = 0.8\text{-}4.$$

Within this ratio, small TCR values are obtained which are desirable from the standpoint of high reliability.

Suitable glass-modifying materials for use in the invention are oxides of (a) transition metals having atomic numbers of 24-28, Zn, alkaline earth metals having atomic numbers of 12-56, and fluorides of alkali metals, alkaline earth metals, nickel and mixtures thereof. The suitable glass modifiers which may be used in the invention are listed in Table I below, along with the allowable concentrations in which they can be used.

The only glass modifier which is essential to all the compositions of the invention is BaO. It must constitute at least 10% of the glass in order to lower the softening point of the composition and to maintain the thermal expansion characteristics of the glass within appropriate limits. However, no more than 40% must be used lest both the coefficient of expansion and the stability of the glass be effected adversely. As used here in the term, "glass stability" refers to the characteristics of the glass

to exist as a single solid phase substantially free of any second solid phase.

Other glass modifiers may, of course, be included in the composition of the invention to lend particular physical or electrical properties to the glass. However, the maximum amount of each of these, which is set out in Table I below, must likewise be limited to avoid instability.

TABLE 1

ALLOWABLE CONCENTRATIONS OF GLASS MODIFIERS

| Modifier Composition | Concentration (Mole %) |
|---|---|
| Oxides of Transition Metals, Atomic Nos. 24-28 | |
| Cr | 0-5 |
| Mn | 0-5 |
| Fe | 0-10 |
| Co | 0-40 |
| Ni | 0-40 |
| Zinc Oxide | 0-35 |
| Oxides of Alkaline Earth Metals (Group IIA) with Atomic Nos. 12-56 | |
| Mg | 0-20 |
| Ca | 0-40 |
| Sr | 0-40 |
| Ba | 10-40 |
| Fluorides of Alkali Metals, Alkaline Earth Metals, Nickel and Mixtures Thereof | 0-10 |

Equally important as the concentration of the individual glass modifiers is the total concentration of all glass modifiers which must be within the range of 15-50% and preferably 25-35%.

It will be recognized that the glass compositions of the invention must not contain any materials which are reducible under the nonoxidizing conditions encountered in the use of these glasses in

thick film resistor compositions. For this reason, reducible oxides such as $Bi_2O_3$, CdO and PbO must not be present in the composition in any significant amount; that is, they may be present in only very small amounts since the reduced materials therefrom adversely effect the stability of the glass. In addition, the exclusion of these compounds also eliminates any the toxicity which might arise from the presence in the glass of oxides of Pb, Bi and Cd.

It is preferred to employ at least about 5% transition metal oxides in the composition of the invention for the reason that those materials tend to catalyze the decomposition by pyrolysis of the organic medium of the thick film resistor compositions in which these glasses are used. Such transition metal oxides also reduce or eliminate staining of the conductive metal layer and substrate during pyrolysis of the organic medium. This is especially true for $SnO/SnO_2/Ta_2O_5$ resistor materials. In addition, certain transition metal oxides can be used to color the glasses of the invention; e.g., Ni lends a gray color and Co a blue color. A yellow color is given by Fe and Mn, and Cr produces a green color.

Most of the above-described glass compositions, when used in conventional nitrogen-fireable thick film resistor systems, help produce resistors having a desirably low TCR. However, the oxides of Fe and Mn, when used as glass modifiers as in the invention, tend to produce resistors having quite negative TCR values. Thus the glass composition of the invention can be used to modify resistor TCR values either upward or downward. In addition, mixtures of these glasses can be used to obtain intermediate TCR values.

When the glass compositions of the invention are used as the binder component for conventional thick film resistor pastes, it is particularly preferred that the binder be comprised of 95-99.9% by weight of the above-described bismuth-, cadmium- and lead-free glass and 5-0.1% wt. of a metal fluoride selected from the group consisting of $CaF_2$, $BaF_2$, $MgF_2$, $SrF_2$, NaF, LiF, KF and $NiF_2$. The use of such metal fluorides with the frit produces a decrease in resistance of the resistors made therefrom.

The glasses of this invention are prepared with conventional glassmaking techniques by mixing the desired components in the desired proportions and heating the mixture to form a melt. As is well known in the art, heating is conducted to a peak temperature and for a time such that the melt becomes entirely liquid and homogeneous. In the present work, the components were premixed by shaking in a polyethylene jar with plastic balls and then melted in a platinum crucible at the desired temperature. The melt was heated at a peak temperature of 1100-1400°C for a period of 1-1/2 hours and then poured into cold water. The maximum temperature of the water during quenching was kept low by increasing the water-to-melt volumetric ratio. After separation from water, the crude frit is freed from residual water by drying in air or by displacing the water by rinsing with methanol. The crude frit is then ball milled for 3-15 hours in alumina containers using alumina balls. Residual alumina picked up by the materials, if any, is not within the observable limit as measured by x-ray diffraction analysis.

After discharging the milled frit slurry from the mill, excess solvent is removed by

decantation and the frit powder is air dried at room temperature. The dried powder is then screened through a 325-mesh screen to remove any large particles.

When the glass frits of the invention are used as the binder component of thick film resistor compositions, an important property of the frit is to aid the liquid phase sintering of the inorganic crystalline particulate materials and form noncrystalline (amorphous) or crystalline materials by devitrification during the heating-cooling cycle (firing cycle) in the preparation of such thick film resistors. This devitrification process can yield either a single crystalline phase having the same composition as the precursor noncrystalline (glassy) material or multiple crystalline phases with different compositions from that of the precursor glassy material.

The glass compositions of the invention have been found to be particularly effective in the $SnO/SnO_2/Ta_2O_5/Nb_2O_5$ pyrochlore-based resistors described in applicant's U.S. Patent Application S.N. 460,572, filed January 24, 1983.

Resistor Materials

One of the most important uses for the glasses of the invention is as inorganic binder for thick film resistors. The conductive phase for thick film resistors usually consists of noble metal oxides such as $RuO_2$ and noble metal polyoxides such as ruthenium, iridium or osmium pyrochlores. However, various base metal materials have been used as well, including metal hexaborides, molybdenum-based compounds, silicides, doped tin oxides, $SnO_2/Ta_2O_5$-based materials and especially the $SnO/SnO_2/Ta_2O_5/Nb_2O_5$-pyrochlore-based

resistors referred to hereinabove. The use of the glass compositions of the invention with ruthenium, iridium and osmium and pyrochlores is not recommended. However, the use of these glasses with the other types of resistors listed above is not only recommended but is a preferred application for the composition of the invention.

Organic Medium

The main purpose of the organic medium is to serve as a vehicle for dispersion of the finely divided solids of the composition in such form that it can readily be applied to a ceramic or other substrate. Thus, the organic medium must first of all be one in which the solids are dispersible with an adequate degree of stability. Secondly, the rheological properties of the organic medium must be such that they lend good application properties to the dispersion.

Most thick film compositions are applied to a substrate by means of screen printing. Therefore, they must have appropriate viscosity so that they can be passed through the screen readily. In addition, they should be thixotropic in order that they set up rapidly after being screened, thereby giving good resolution. While the rheological properties are of primary importance, the organic medium is preferably formulated also to give appropriate wetability of the solids and the substrate, good drying rate, dried film strength sufficient to withstand rough handling and good firing properties. Satisfactory appearance of the fired composition is also important.

In view of all these criteria, a wide variety of inert liquids can be used as organic medium. The organic medium for most thick film compositions is typically a solution of resin in a

solvent and, frequently, a solvent solution containing both resin and thixotropic agent. The solvent usually boils within the range of 130-350°C.

By far, the most frequently used resin for this purpose is ethyl cellulose. However, resins such as ethylhydroxyethyl cellulose, wood rosin, mixtures of ethyl cellulose and phenolic resins, polymethacrylates of lower alcohols and monobutyl ether of ethylene glycol monoacetate can also be used.

The most widely used solvents for thick film applications are terpenes such as alpha- or beta-terpineol or mixtures thereof with other solvents such as kerosene, dibutylphthalate, butyl carbitol, butyl carbitol acetate, hexylene glycol and high boiling alcohols and alcohol esters. Various combinations of these and other solvents are formulated to obtain the desired viscosity and volatility requirements for each application.

Among the thixotropic agents which are commonly used are hydrogenated caster oil and derivatives thereof and ethyl cellulose. It is, of course, not always necessary to incorporate a thixotropic agent since the solvent/resin properties coupled with the shear thinning inherent in any suspension may alone be suitable in this regard.

The ratio of organic medium to solids in the dispersions can vary considerably and depends upon the manner in which the dispersion is to be applied and the kind of organic medium used. Normally, to achieve good coverage, the dispersions will contain complementally by weight 60-90% solids and 40-10% organic medium. Such dispersions are usually of semifluid consistency and are referred to commonly as "pastes".

The pastes are conveniently prepared on a three-roll mill. The viscosity of the pastes is typically within the following ranges when measured at room temperature on Brookfield viscometers at low, moderate and high shear rates:

| Shear Rate ($Sec^{-1}$) | Viscosity (Pa.S) | |
|---|---|---|
| 0.2 | 100-5000 | - |
| | 300-2000 | Preferred |
| | 600-1500 | Most preferred |
| 4 | 40-400 | - |
| | 100-250 | Preferred |
| | 140-200 | Most preferred |
| 384 | 7-40 | - |
| | 10-25 | Preferred |
| | 12-18 | Most preferred |

The amount and type of organic medium (vehicle) utilized is determined mainly by the final desired formulation viscosity and print thickness.

Formulation and Application

In the preparation of the composition of the present invention, the particulate inorganic solids are mixed with the organic medium and dispersed with suitable equipment, such as a three-roll mill, to form a suspension, resulting in a composition for which the viscosity will be in the range of about 100-150 Pa.S at a shear rate of 4 $sec^{-1}$.

In the examples which follow, the formulation was carried out in the following manner.

The ingredients of the paste, minus about 5% wt. of the estimated organic components which will be required, are weighed together in a container. The components are then vigorously mixed to form a uniform blend; then the blend is passed through dispersing equipment such as a three-roll mill to achieve a good dispersion of particles. A Hegman

gauge is used to determine the state of dispersion of the particles in the paste. This instrument consists of a channel in a block of steel that is 25 µm deep (1 mil) on one end and ramps up to zero depth at the other end. A blade is used to draw down paste along the length of the channel. Scratches will appear in the channel where the agglomerates' diameter is greater than the channel depth. A satisfactory dispersion will give a fourth scratch point of 10-18 µm typically. The point at which half of the channel is uncovered with a well dispersed paste is between 3 and 8 µm typically. Fourth scratch measurement of 20 µm and "half-channel" measurements of 10 µm indicate a poorly dispersed suspension.

The remaining 5% of the organic components of the paste is then added and the resin content of the paste is adjusted for proper screen-printing rheology.

The composition is then applied to a substrate such as alumina, usually by the process of screen printing, to a wet thickness of about 30-80 microns, preferably 35-70 microns and most preferably 40-50 microns. The electrode compositions of this invention can be printed onto the substrates either by using an automatic printer or a hand printer in the conventional manner. Preferably, automatic screen printing techniques are employed using a 200- to 325-mesh screen. The printed pattern is then dried at below 200°C, e.g., about 150°C, for about 5-15 minutes before firing. Firing to effect sintering of both the inorganic binder and the finely divided particles of metal is preferably done in a controlled atmosphere belt conveyor furnace with a temperature profile that will allow burnout of the

organic matter at about 300-600°C, a period of maximum temperature of about 800-950°C lasting about 5-15 minutes, followed by a controlled cooldown cycle to prevent over sintering, unwanted chemical reactions at intermediate temperatures or substrate fracture which can occur from too rapid cooldown. By controlled atmosphere is meant a nonoxidizing atmosphere such as nitrogen, argon or mixtures thereof. The overall firing procedure will preferably extend over a period of about 1 hour, with 20-25 minutes to reach the firing temperature, about 10 minutes at the firing temperature and about 20-25 minutes in cooldown. In some instances, total cycle times as short as 30 minutes can be used.

Sample Preparation

Samples to be tested for temperature coefficient of resistance (TCR) are prepared as follows:

A pattern of the resistor formulation to be tested is screen printed upon each of ten coded Alsimag 614 1 x 1" ceramic substrates and allowed to equilibrate at room temperature and then dried at 150°C. The mean thickness of each set of ten dried films before firing must be 22-28 microns as measured by a Brush Surfanalyzer. The dried and printed substrate is then fired for about 60 minutes using a cycle of heating at 35°C per minute to 850°C, dwell at 850°C for 9 to 10 minutes and cooled at a rate of 30°C per minute to ambient temperature.

Resistance Measurement and Calculations

Substrates prepared as described above are mounted on terminal posts within a controlled temperature chamber and electrically connected to a digital ohm meter. The temperature in the chamber is adjusted to 25°C and allowed to equilibrate, after

which the resistance of each substrate is measured and recorded.

The temperature of the chamber is then raised to 125°C and allowed to equilibrate, after which the resistance of the substrate is again measured and recorded.

The temperature of the chamber is then cooled to -55°C and allowed to equilibrate and the cold resistance measured and recorded.

The hot and cold temperature coefficients of resistance (TCR) are calculated as follows:

$$\text{Hot TCR} = \frac{R_{125°C} - R_{25°C}}{R_{25°C}} \times (10{,}000)\ \text{ppm/°C}$$

$$\text{Cold TCR} = \frac{R_{-55°C} - R_{25°C}}{R_{25°C}} \times (-12{,}500)\ \text{ppm/°C}$$

The values of $R_{25°C}$ and Hot and Cold TCR are averaged and $R_{25°C}$ values are normalized to 25 microns dry printed thickness and resistivity is reported as ohms per square at 25 microns dry print thickness. Normalization of the multiple test values is calculated with the following relationship:

$$\text{Normalized Resistance} = \frac{\text{Average Measured Resistance} \times \text{Average Dry Print Thickness, microns}}{25\ \text{microns}}$$

Coefficient of Variance

The coefficient of variance (CV) is a function of the average and individual resistances for the resistors tested and is represented by the relationship $\sigma/R_{av}$, wherein

$$\sigma = \sqrt{\frac{\Sigma i\,(R_i - R_{av})^2}{n-1}}$$

$R_i$ = measured resistance of individual sample.

$R_{av}$ = calculated average resistance of all samples ( ${}_iR_i/n$)

n = number of samples

$$CV = \frac{\sigma}{R_{av.}} \times 100\ (\%)$$

Laser Trim Stability

Laser trimming of thick film resistors is an important technique for the production of hybrid microelectronic circuits. A discussion can be found in Thick Film Hybrid Microcircuit Technology by D. W. Hamer and J. V. Biggers (Wiley 1972), p. 173ff. Its use can be understood by considering that the resistance of a particular resistor printed with the same resistive ink on a group of substrates has a Gaussian-like distribution. To make all the resistors have the same design value for proper circuit performance, a laser is used to trim resistances up by removing (vaporizing) a small portion of the resistor material. The stability of the trimmed resistor is then a measure of the fractional change (drift) in resistance that occurs after laser trimming. Low resistance drift - high stability - is necessary so that the resistance remains close to its design value for proper circuit performance. The % change in resistance is indicated by "$X_{av}$" and the standard deviation of each set of measurements by the term "S".

EXAMPLES

In the examples which follow, the glass frit compositions listed in Table II below were made by the above described procedure. All were single phase glasses with no secondary phases present.

Each of the below-listed glasses was formulated into screen-printable compositions with 55% conductive material, 19% glass and 26% organic medium. The same conventional organic medium was used in all formulations. However, the screen-printable composition of Example 21 also contained 0.2% $CaF_2$. The conductive material in each of the examples was prepared as follows:

A tantalum-tin pyrochlore composition corresponding to the formula

$$Sn^{2+}_{1.75}Ta_{1.75}Sn^{4+}_{0.25}O_{6.625}$$

was prepared by ball milling 71.42 g of SnO, 117.16 g of $Ta_2O_5$ and 11.42 g of $SnO_2$ using water as a dispersing medium. Upon completion of thorough mixing, the admixtures were dried and placed in alumina crucibles and heated in a furnace containing a nonoxidizing ($N_2$) atmosphere. The mixtures were then heated for 24 hours at 872°C $\pm$ 10°C to form the pyrochlore. The preparation and use of such pyrochlores is described in applicant's copending U.S. Patent Application S.N. 460,572, filed January 24, 1983.

The above-described pyrochlore was then divided into 100 g quantities, each of which was combined with 400 g of purified $SnO_2$ and ball milled for one hour using distilled water as a liquid milling medium. Upon completion of ball mill mixing, the mixtures of pyrochlore and $SnO_2$ were placed in a nitrogen furnace and fired for 25 hours at 875°C. After firing and cooling, the powders were screened through a 200-400 mesh stainless steel screen. The conductive phase material prepared in this manner was then used to formulate a thick film resistor paste having the composition given above.

The physical properties of the 21 glasses of the invention and the electrical properties of the

fired resistors made therefrom are given in Table 2 which follows:

Table 2

Glass Compositions (Mole %)

| | I | II | III | IV |
|---|---|---|---|---|
| MgO | 5.0 | 5.0 | 5.0 | - |
| CaO | - | - | - | - |
| SrO | - | - | - | - |
| BaO | 20.0 | 15.0 | 15.0 | 20.0 |
| MnO | - | - | 5.0 | - |
| $Fe_2O_3$ | - | 2.50 | 2.5 | 5.0 |
| NiO | - | - | - | - |
| CuO | - | - | - | - |
| ZnO | - | 5.0 | - | 10.0 |
| $Al_2O_3$ | 5.0 | 2.50 | 2.5 | 5.0 |
| $B_2O_3$ | 55.0 | 54.0 | 54.0 | 48.0 |
| $SiO_2$ | 15.0 | 15.0 | 15.0 | 10.0 |
| $SnO_2$ | - | - | - | - |
| $ZrO_2$ | - | 1.0 | 1.0 | 2.0 |
| $TiO_2$ | - | - | - | - |
| $CaF_2$ | - | - | - | - |
| $\alpha$(ppm/°C)(1) | 7.1 | 6.9 | 6.6 | 6.9 |
| Tg (°C)(2) | 578 | 565 | 555 | 543 |
| Td (°C)(3) | 620 | 612 | 600 | 595 |
| $R_{av}$(KΩ/□) | 80.65 | 3481.6 | 2728.8 | 9809.4 |
| CV(%) | 3.97 | 14.76 | 3.72 | 25.37 |
| $HTCR_{av}$ (ppm/°C) | -76.7 | -1060.0 | -1000.4 | -6932.5 |

(1) Linear coefficient of expansion per ASTM-E228.
(2) Glass transition temperature.
(3) Dilatometer softening point.

<u>Table 2</u> (continued)

| | V | VI | VII | VIII |
|---|---|---|---|---|
| MgO | - | - | 10.0 | 10.0 |
| CaO | - | - | - | - |
| SrO | - | - | - | - |
| BaO | 4.0 | | 20.0 | 20.0 |
| MnO | - | - | - | - |
| $Fe_2O_3$ | - | - | - | - |
| NiO | - | - | - | - |
| CuO | - | - | - | - |
| ZnO | 31.68 | 38.0 | - | - |
| $Al_2O_3$ | 5.56 | 5.0 | - | - |
| $B_2O_3$ | 50.22 | 57.0 | 45.0 | 45.0 |
| $SiO_2$ | 8.53 | - | 15.0 | 20.0 |
| $SnO_2$ | - | - | - | - |
| $ZrO_2$ | - | - | 10.0 | - |
| $TiO_2$ | - | - | - | 5.0 |
| $CaF_2$ | - | - | - | - |
| α(ppm/°C)(1) | - | 4.9 | 6.9 | 7.2 |
| Tg (°C)(2) | - | 540 | | 580 |
| Td (°C)(3) | - | 610 | 680 | 640 |
| $R_{av}$(KΩ/□) | 350.94 | 346.9 | 639.5 | 1805.3 |
| CV(%) | 9.28 | 5.51 | 2.88 | 5.32 |
| $HTCR_{av}$ (ppm/°C) | -415.5 | -590.6 | +473.1 | -1923.8 |

Table 2 (continued)

| | IX | X | XI | XII |
|---|---|---|---|---|
| MgO | - | - | 5.0 | 6.5 |
| CaO | - | - | - | 5.0 |
| SrO | - | - | - | - |
| BaO | 20.0 | 20.0 | 20.0 | 18.5 |
| MnO | 20.0 | - | - | - |
| $Fe_2O_3$ | - | - | - | - |
| NiO | - | 10.0 | 5.0 | - |
| CuO | - | - | - | - |
| ZnO | - | - | - | - |
| $Al_2O_3$ | - | - | - | - |
| $B_2O_3$ | 40.0 | 45.0 | 45.0 | 42.0 |
| $SiO_2$ | 20.0 | 23.0 | 23.0 | 25.0 |
| $SnO_2$ | - | - | - | 2.0 |
| $ZrO_2$ | - | 2.0 | 2.0 | 1.0 |
| $TiO_2$ | - | - | - | - |
| $CaF_2$ | - | - | - | - |
| α(ppm/°C)(1) | - | - | - | - |
| Tg (°C)(2) | - | - | - | - |
| Td (°C)(3) | - | - | - | - |
| $R_{av}$(KΩ/□) | 123.2 | 726.2 | 96.98 | 64.45 |
| CV(%) | 2.33 | 5.49 | 7.58 | 5.42 |
| $HTCR_{av}$ (ppm/°C) | +345.0 | +169.3 | +232.6 | +276.1 |

Table 2 (continued)

| | XIII | XIV | XV | XVI |
|---|---|---|---|---|
| MgO | 6.5 | 10.0 | 10.0 | - |
| CaO | 5.0 | - | - | - |
| SrO | - | - | - | - |
| BaO | 18.5 | 20.0 | 20.0 | 20.0 |
| MnO | - | - | - | 30.0 |
| $Fe_2O_3$ | - | - | - | - |
| NiO | - | - | - | - |
| CuO | - | - | - | - |
| ZnO | - | - | - | - |
| $Al_2O_3$ | - | - | - | - |
| $B_2O_3$ | 40.0 | 45.0 | 45.0 | 30.0 |
| $SiO_2$ | 27.0 | 23.0 | 25.0 | 20.0 |
| $SnO_2$ | 2.0 | - | - | - |
| $ZrO_2$ | 1.0 | 1.0 | - | - |
| $TiO_2$ | - | - | - | - |
| $CaF_2$ | - | 1.0 | - | - |
| α(ppm/°C)(1) | - | - | - | 9.5 |
| Tg (°C)(2) | - | - | - | 535 |
| Td (°C)(3) | - | - | - | 580 |
| $R_{av}$(KΩ/□) | 55.90 | 175.5 | 137.2 | 28.65 |
| CV(%) | 4.33 | 7.80 | 9.32 | 9.78 |
| $HTCR_{av}$ (ppm/°C) | +231.3 | +171.2 | +267.3 | +368.1 |

Table 2 (continued)

| | XVII | XVIII | XIX |
|---|---|---|---|
| MgO | 4.1 | 2.1 | 10.0 |
| CaO | - | - | - |
| SrO | 8.2 | - | - |
| BaO | 12.2 | 17.2 | 20.0 |
| MnO | - | - | - |
| $Fe_2O_3$ | - | - | - |
| NiO | - | - | - |
| CuO | - | 0.5 | - |
| ZnO | 12.2 | 6.7 | - |
| $Al_2O_3$ | - | 4.3 | - |
| $B_2O_3$ | 44.9 | 47.3 | 45.0 |
| $SiO_2$ | 17.3 | 17.4 | 20.0 |
| $SnO_2$ | - | - | - |
| $ZrO_2$ | 1.0 | 4.5 | 5.0 |
| $TiO_2$ | - | - | - |
| $CaF_2$ | - | - | - |
| α(ppm/°C)[(1)] | - | 5.3 | 6.8 |
| Tg (°C)[(2)] | - | 570 | 580 |
| Td (°C)[(3)] | - | 625 | 650 |
| $R_{av}$(KΩ/□) | - | 686.3 | 756.4 |
| CV(%) | - | 2.24 | 3.75 |
| $HTCR_{av}$ (ppm/°C) | - | +153.9 | +448.7 |

Table 2 (continued)

| | XX | XXI | XXII |
|---|---|---|---|
| MgO | - | - | 10.0 |
| CaO | 9.5 | 8.9 | - |
| SrO | - | - | - |
| BaO | 18.5 | 17.2 | 20.0 |
| MnO | - | - | - |
| $Fe_2O_3$ | - | - | - |
| NiO | - | 7.0 | - |
| CuO | - | - | - |
| ZnO | - | - | - |
| $Al_2O_3$ | - | - | - |
| $B_2O_3$ | 37.0 | 34.4 | 45.0 |
| $SiO_2$ | 32.5 | 30.2 | 23.0 |
| $SnO_2$ | 2.5 | 2.3 | - |
| $ZrO_2$ | - | - | 2.0 |
| $TiO_2$ | - | - | - |
| $CaF_2$ | - | - | - |
| α(ppm/°C)(1) | - | - | - |
| Tg (°C)(2) | - | - | - |
| Td (°C)(3) | - | - | - |
| $R_{av}$(KΩ/□) | 29.72 | 12.5 | - |
| CV(%) | 1.64 | 3.35 | - |
| $HTCR_{av}$ (ppm/°C) | +20.7 | -150 | - |

From the data in Table 2, it is evident that these glasses have a higher Td than lead borosilicate glasses. Moreover, the linear coefficient of expansion (alpha) is compatible with that of alumina. Some of the glasses have a higher alpha than alumina. However, because compatibility with the substrate is a function of both the glass and the conductive phase material, they can still be used on alumina substrates when they are combined with conductive materials, such as $SnO_2$, which have a low alpha value. The alpha value of $SnO_2$ is only about 4 ppm/°C.

The high Td, compared to lead borosilicate glasses, allows more of the carbonaceous material to burn off from the thick film composition before some of it becomes sealed in by the glass. Another attribute of these glasses is that they are "short" glasses; i.e., they have a steep decrease in viscosity above Td. This property allows a good densification of the composite structure.

In addition, lower firing temperatures on the order of 800-900°C are possible using such short glasses. By comparison, the glasses used with the $SnO_2$-based conductive materials of Canadian Patent 1063796 require about 1000°C for resistor formation.

The data on the properties of the pyrcohlore-based resistors made with the glasses of the invention reflect the role of the glass modifiers as well as the minor ingredients $SnO_2$ and $ZrO_2$ on the electrical properties. For example, $SnO_2$-containing glasses (Examples XII, XIII and XX) lower the resistance while the combination of $SnO_2$ and $ZrO_2$ (Examples XII and XIII) both lower resistance and raise HTCR. On the other hand, glasses cntaining $ZrO_2$ without $SnO_2$ increase both resistance and HTCR (Examples VII, X and XIX).

/

The data also show that glasses containing $Fe_2O_3$, ZnO and $TiO_2$ increase resistance and lower TCR (Examples II-VI and VIII). In fact, such $Fe_2O_3$-containing glasses can be used to produce thermistors (Example IV).

In addition to the various colors of the resistors produced from MnO, CoO, NiO and CuO-containing glasses, these glasss also give a range of resistors all having desirably positive HTCR values. From these data, it is evident that the glass compositions of the invention can be used quite effectively over a wide range to change the TCR characteristics of resistor compositions in which they are used as binders.

A series of three thick film resistor compositions was prepared by the procedure outlined hereinabove using glasses XI, XIX, XX and XXII as the inorganic binder component. Each of the resistors was evaluated with respect to post-laser trim stability. These data are given in Table 3 below:

TABLE 3

POST LASER TRIM STABILITY OF RESISTORS

| Ex. No. | Composition (% wt.) Conductive Phase | Glass XI | Glass XIX | Glass XX | Glass XXII | $CaF_2$ | | Aging Conditions 20°C | 150°C | 40°C/30% RH |
|---|---|---|---|---|---|---|---|---|---|---|
| XXIII | 64.9 | 3.3 | - | 31.5 | - | 0.3 | Trimmed $X_{av}$ | 0.41 | 0.93 | 1.18 |
| | | | | | | | Trimmed S | 0.07 | 0.09 | 0.15 |
| | | | | | | | Untrimmed $X_{av}$ | 0.06 | 0.41 | 0.52 |
| | | | | | | | Untrimmed S | 0.03 | 0.14 | 0.20 |
| XXIV | 62.2 | 3.5 | - | 12.0 | 22.9 | 0.3 | Trimmed $X_{av}$ | 0.52 | 1.00 | 1.40 |
| | | | | | | | Trimmed S | 0.39 | 0.20 | 0.45 |
| | | | | | | | Untrimmed $X_{av}$ | 0.05 | 0.54 | 0.46 |
| | | | | | | | Untrimmed S | 0.07 | 0.27 | 0.13 |
| XXV | 60.8 | 3.7 | 35.2 | - | - | 0.3 | Trimmed $X_{av}$ | 0.53 | 1.20 | 1.70 |
| | | | | | | | Trimmed S | 0.36 | 0.40 | 0.75 |
| | | | | | | | Untrimmed $X_{av}$ | 0.22 | 0.42 | 1.11 |
| | | | | | | | Untrimmed S | 1.3 | 0.22 | 0.8 |

The above data show that the resistor pastes using the glass compositions of the invention as the inorganic binder produced resistors which had quite good post-laser trim stability, desirably low temperature sensitivity and were quite resistant to high humidity, high temperature conditions.

## CLAIMS

1. A glass composition which is substantially free of Bi, Cd and Pb comprising by mole %:

A. 50-85% of a material selected from the group consisting of 20-60% $B_2O_3$, 10-50% $SiO_2$, 0-15% $Al_2O_3$, 0-5% $SnO_2$, 0-10% $ZrO_2$, 0-5% $Nb_2O_5$, 0-5% $MoO_3$, 0-5% $WO_3$, 0-10% $TiO_2$, 0-10% $V_2O_5$, 0-10% $Ta_2O_5$, 0-10% $HfO_2$ and mixtures thereof and

B. 50-15% of a material selected from the group consisting of 0-15% MgO, 0-20% CaO, 0-5% $Cr_2O_3$, 0-30% MnO, 0-5% $Fe_2O_3$, 0-15% CoO, 0-15% NiO, 0-5% CuO, 0-35% ZnO, 0-20% SrO, 10-35% BaO and 0-5% of a fluoride of a metal selected from the group consisting of alkali metals, alkaline earth metals and nickel and mixtures thereof, characterized further in that

(1) the mole ratio $B_2O_3/SiO_2 \geq 0.8$;

(2) $\Sigma(B_2O_3$ and $SiO_2) \geq 50$; and

(3) the mole ratio

$$\frac{B_2O_3 + Al_2O_3}{SiO_2 + SnO_2 + ZrO_2} = 0.8\text{-}4.$$

2. The composition of claim 1 in which the Group A materials = 60-85%.

3. A composition which is comprised of 95-99.9% by weight of the glass of claim 1 and 5-0.1% by weight of a metal fluoride selected from the group consisting of $CaF_2$, $BaF_2$, $MgF_2$, $SrF_2$, NaF, LiF, KF and $NiF_2$.

0132810

European Patent Office

# EUROPEAN SEARCH REPORT

Application number: EP 84108641.6

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| P,X, D | EP - A1 - 0 095 775 (E.I. DU PONT DE NEMOURS)<br>* Claims 16,17; page 18, lines 21-27; page 19, table 1; page 20, table 1 *<br>-- | 1-3 | C 03 C 3/064<br>C 03 C 3/066<br>C 03 C 3/068<br>C 03 C 3/089<br>C 03 C 3/091<br>C 03 C 3/093<br>C 03 C 3/095<br>C 03 C 3/097<br>C 03 C 3/115<br>C 03 C 3/118<br>//H 01 C 7/00 |
| X | EP - A1 - 0 008 132 (E.I. DU PONT DE NEMOURS)<br>* Page 13, lines 22-28 *<br>-- | 1,2 | |
| X | GB - A - 938 714 (ERNST LEITZ)<br>* Claims 1-4; page 5, lines 2-17 *<br>-- | 1,3 | |
| X | US - A - 2 393 449 (W.H. ARMISTEAD)<br>* Claims; page 1, right column, lines 36-50 *<br>-- | 1,3 | TECHNICAL FIELDS SEARCHED (Int. Cl.4) |
| A | DE - B1 - 2 435 553 (JENAER GLAS-WERK)<br>* Claim 1 *<br>-- | 1,3 | C 03 C<br>H 01 B<br>H 01 C<br>H 01 L |
| A | GB - A - 2 023 128 (CARL-ZEISS--STIFTUNG)<br>* Abstract *<br>---- | 1,3 | |

The present search report has been drawn up for all claims

| Place of search | Date of completion of the search | Examiner |
|---|---|---|
| VIENNA | 22-10-1984 | HAUSWIRTH |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document

EPO Form 1503 03 82